# EUROPEAN PATENT SPECIFICATION

(11) **EP 2 452 804 B1**
(45) Date of publication and mention of the grant of the patent: **03.06.2015**
(21) Application number: 10191218.6
(22) Date of filing: 15.11.2010
(51) Int. Cl.: B29C 59/04

(54) **Device and method for manufacturing an embossed structure on a pearl synthetic paper made of a 3-layer co-extruded biaxially oriented polypropylene**
Vorrichtung und Verfahren zur Verarbeitung einer Prägestruktur auf einem dreischichtigen, co-extrudierten, synthetischen Perlmuttpapier aus biaxial orientiertem Polypropylen
Dispositif et procédé pour la réalisation d'une structure gaufrée sur un papier synthétique perlé constitué de trois couches de polypropylène co-extrudées à orientation biaxiale

(43) Date of publication of application: 16.05.2012
(73) Proprietor: Nan-Ya Plastics Corporation, Taipei (TW)
(72) Inventor: Lin, Allen F. C., Taipei (TW); Cheng, Hong-Kuo, Taipei (TW)
(74) Representative: Viering, Jentschura & Partner Patent- und Rechtsanwälte

(56) References cited:
- EP-A1- 0 773 094
- DE-B- 1 156 969
- JP-A- 3 087 258
- US-A- 5 164 227
- US-A- 5 536 468
- US-B1- 6 364 988

## Description

### FIELD OF THE INVENTION

The present invention generally relates a device for processing the impression structure of 3-layer co-extruded biaxial oriented polypropylene (BOPP) pearl synthetic paper. The impressing texture is produced by the modified embosser, which includes at least one rubber back-up roll having Shore A hardness of 60-90; the weight of synthetic paper is 20 g/m²-210 g/m², the preheating temperature is 65°C-160°C and the impression is processed at less than 160°C. The synthetic paper possesses certain roughness and specific impression whereby to be advantageous in the paper sheet feeding to the printer or it can substitute the canvas or the art paper.

### DESCRIPTION OF THE PRIOR ART

US Patent No. 5,536,468 of July 16, 1996 to Arjobex Co: discloses a method of making watermarks on a polymeric paper. The method is to pass a polymeric sheet between two rollers in abutment with each other, wherein at least one of the rollers having a recessed and/or raised motif to form an impression on the passing sheet which impression corresponds to the recessed and/or raised motifs on said roller(s), and the sheet is oriented by stretching the sheet. The impressed and oriented sheet has dark areas corresponding to the raised portions and light areas corresponding to recessed portion of the motif. It is impression technology of a single polymeric sheet.

US Patent No. 6,364,988 B1 of April 2, 2002 to Nan Ya Plastics Co. discloses a 3-layer co-extruded biaxially oriented polypropylene synthetic paper produced by means of 3-layer co-extrusion, wherein a polypropylene resin and a inorganic compositions separately extruded by a twin screw primary extruder and two twin screw secondary extruders are co-flowed by a same T-die to form a three layers coating sheet with paper sheet layer and resin foamed intermediate layer/paper sheet layer or resin layer. Furthermore, cooling, biaxial orientation, corona treatment and winding to form a 3-layer co-extrusion synthetic paper.

The 3-layer co-extrusion synthetic paper disclosed in US Patent No. 6,364,988 B1 is substituted the paper made of natural paper pulp and it could be use to write, print, package and other kinds of application. According to the 3-layer structure of synthetic paper of Japanese Patent Nos. 46-040794B(1971), 56-118437A(1981), 56-141339A(1981), and 03-087255A(1991), these paper are unlike the single layer sheet of the US Patent No. 6,364,988 patent which is easy to have impression and become a water marks product.

European Patent application 773094 A1 describes a method for manufacturing a synthetic paper film from a mixture of polyethylene and polypropylene which comprises the step of embossing the film between a steel embossing roller and a rubber back-up roller.

US Patent No. 5164227 discloses an embossing device for a coated paper sheet.

In order to overcome the difficulty of producing the impression on the 3-layer synthetic paper, the applicant has researched for a long time and discovered that the back-up roll of embosser is modified to be a rubber back-up roll with Shore A hardness of 60-90 and the 3-layer structure paper is preheated at 65-160°C, and then the speed of 3-layer structure paper passed through the back-up roll, the embossing roll and the cooling drum are controlled between 15-18 meters per minute. The cooling drum keeps at 7°C. Thus, the embossed synthetic paper is able to obtain the satisfied result same as the canvas or the art paper so that it can substitute them.

### SUMMARY OF THE INVENTION

The impressing structure of 3-layer co-extruded biaxial oriented polypropylene (BOPP) pearl synthetic paper of the present invention is produced by the modified embossing device. The weight range of synthetic paper for processing is 20 g/m²-210 g/m² and the synthetic paper becomes certain roughness to facilitate sheet-fed or as substitutive of canvas or art paper. The modified embosser includes at least one rubber back-up roll having Shore A hardness of 60-90, a quartz electric heating oven and a infrared heater preheated to 65°C to 160°C and embossed, and two adjacent cooling drums with 7°C.

The device for processing the impressing structure of 3-layer co-extruded biaxial oriented polypropylene pearl synthetic paper of the present invention is to preheat the synthetic paper at the 65-160°C. Then, the synthetic paper is embossed by passing through the rubber back-up roll having Shore A hardness of 60-90 and the embossing roll having impression patterns and the embossing roll and the back-up roll are cooled synchronously. Finally, the synthetic paper is cooling by the cooling drum keeping at 7°C.

According to the device for processing the impressing structure of 3-layer co-extruded biaxial oriented polypropylene pearl synthetic paper of the present invention, the depth of the impression on the synthetic paper is between 0.2-1000µm.

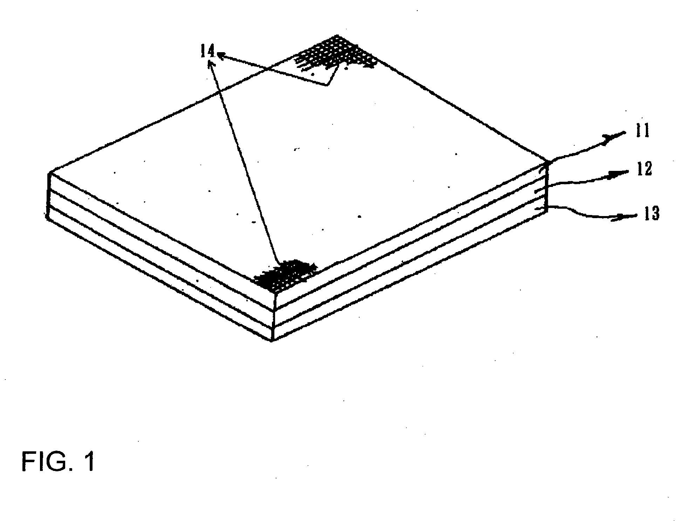

According to the device for processing the impressing structure of 3-layer co-extruded biaxial oriented polypropylene pearl synthetic paper of the present invention, the preheating process is to heat the both side of synthetic paper by sectional heater and then the synthetic paper is impressed by passing through the embossing roll and the back-up roll having at least Shore A hardness of 60-90. The impressing structure of synthetic paper is shown in FIG. 1.

### BRIEF DESCRIPTION OF THE DRAWINGS

FIG. 1 illustrates a diagram of the impressing structure of pearl synthetic paper in accordance with the present invention;
FIG. 2 illustrates a diagram of the process for manufacturing the biaxial oriented polypropylene pearl synthetic paper in accordance with the present invention;
FIG. 3 illustrates a diagram of the device for processing the impressing structure of pearl synthetic paper in accordance with the present invention.

### DESCRIPTION OF THE PREFERRED EMBODIMENT

According to the present invention, the above mentioned 3-layer co-extruded biaxial oriented polypropylene pearl synthetic paper is a base substrate to be impressed any demanded impression patterns. The synthetic paper is passed through the modified device for processing the impressing texture. To choose the weight of pearl synthetic paper between 20g and 210g per square meters and to apply the means of heating and impressing on the pearl synthetic paper. Thus, the pearl synthetic paper of present invention could form a certain roughness to be contributive in feeding the paper sheet to the printer, or could process to be an imitating canvas product, which is produced by the modified embosser with EPDM (Ethylene-Propylene-Diene Monomer) rubber back-up roll having Shore A hardness of 60-90.

According to the impression device of the present invention, the synthetic paper is preheated to about 65°C to 160°C at first. Before passing through the embossing roll and the back-up roll with special hardness, the synthetic paper is heated by an infrared heater to less than 160°C, which is the melting point of polypropylene. After passing through the embossing roll and the back-up roll with special hardness, the synthetic paper with impression is passed through cooling drum at 7°C rapidly to be cooled.

The 3-layer co-extruded biaxial oriented polypropylene pearl synthetic paper is 3-layer structure, for example, mist paper sheet layer/foam intermediate layer/adhesive layer or glare paper sheet layer/foam intermediate layer/adhesive layer, or resin layer/resin layer/adhesive layer, wherein the material of adhesive layer is PP, LPPE or HDPE.

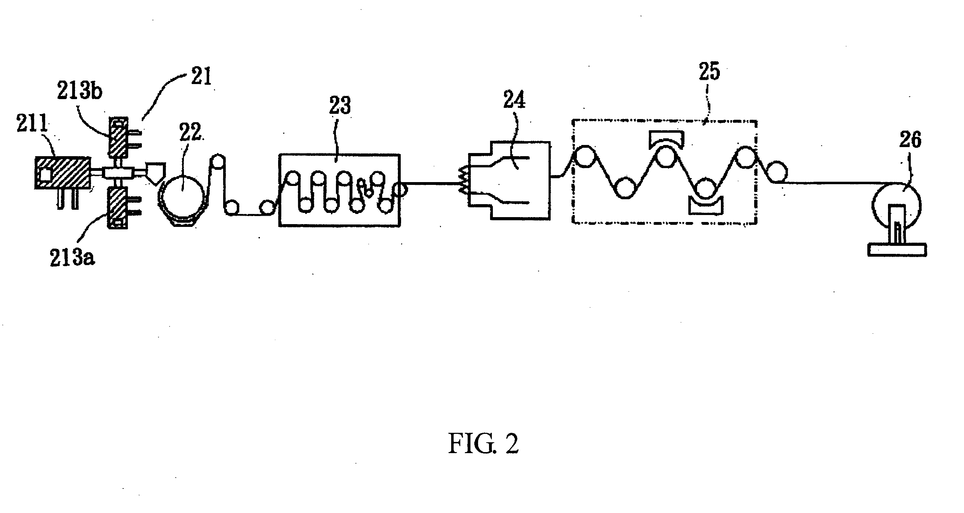

FIG. 2 illustrates a diagram of the process for manufacturing the biaxial oriented polypropylene pearl synthetic paper in accordance with the present invention. The label 21 shown in figure is a twin-screw extruder device of extractable extruder device with side feeding hoppers of the synthetic paper process. The extruder device 21 includes one primary extractable twin-screw extruder 211 with primary feeding hopper and two secondary extractable twin-screw extruder 213a, 213b with side feeding hoppers. The processing temperature is depended on the raw material of resin composite, MFI, crystallinity, production rate and thickness of product.

After the material extrusion molding, to process a cooling process by a cooling shaping roller device 22, which is to cool the 3-layer co-extruded of high temperature, wherein the cooling shaping roller device could adopt a water cooling or air cooling device. The control of cooling temperature in this process is quite important, which promises the success of the steps of following process.

Furthermore, the material base molded by cooling process is fed in longitudinal orientation device 23 to process the longitudinal orientation process, wherein it could set a specific temperature for preheating to soften the material, and then oriented in two steps, high and low speed orientation, to enhance the longitudinal mechanical strength which is then tempered and formed.

Then, the material formed through the longitudinal orientation device is fed into the lateral orientation device 24. The thinner material of formed through the longitudinal orientation device is preheated and softened at a specific temperature (depending on the paper sheet thickness and the production rate), and then laterally oriented and finally tempered and formed, so as to enhance the dimensional stability of pearl synthetic paper.

Thereafter, corona discharge treatment device 25 is used in corona discharge treatment process in the aim to improve the physical character of the surface of the paper sheet and membrane to be used in printing, coating, gluing and lamination etc.. Specific high frequency discharge equipment is used in single or double power processing in order to reach specific moisturizing tension rate.

Lastly, forming was taken by rolling device 26 after the corona discharge treatment, and slitting, cutting, or piece packing synthetic paper product can be formed as needed.

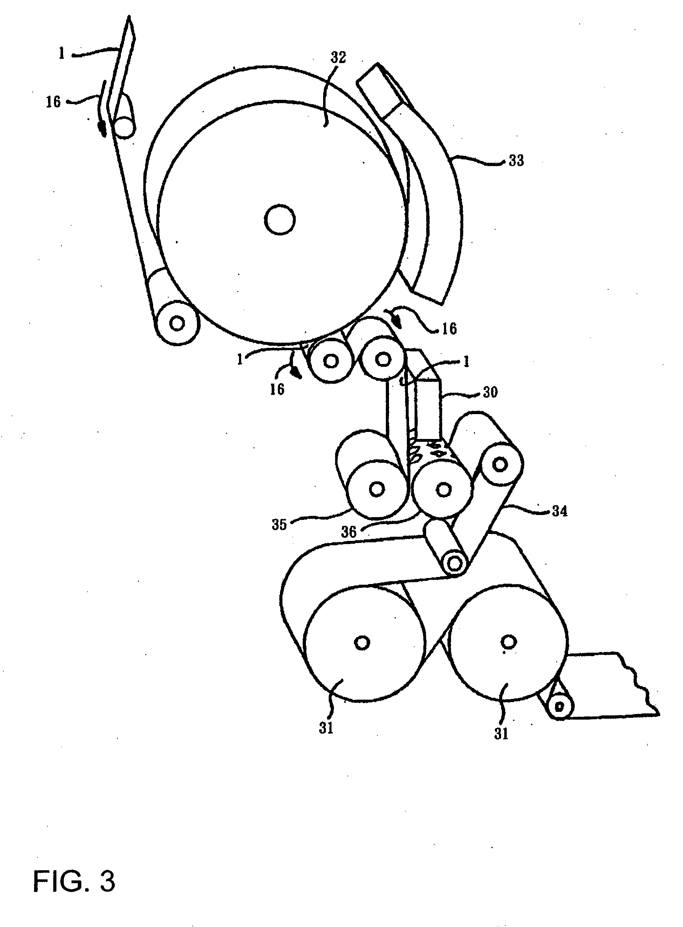

FIG. 3 illustrates a diagram of the device for processing the impressing structure of the present invention.

The device for processing the impressing structure of this present invention is to feed the 3-layer co-extruded biaxial oriented polypropylene pearl synthetic paper 1 as mentioned above through the modified embosser refined by the applicant, which being experimental modified and refined in structure.

According to the present invention, after long term experiment, modification and refining is involved in the hardness of the EPDM rubber, namely the "backs", should have Shore A hardness thickness of 60-90 relatively.

The embossing device of the present invention as shown in FIG. 3, which comprising: a rubber back-up roll 35 having Shore A hardness of 60-90; an embossing roll with a designed pattern and a cooling system having a core; a quartz electric heating oven 33 preheated to 65°C to 160°C which is on one side of a preheating roll and has a gap between the preheating roll; a infrared heater 30 which is under the quartz electric heating oven; and two adjacent cooling drums 31 with 7°C. The 3-layer co-extruded biaxial oriented polypropylene pearl synthetic paper 1 along heating roll 32, which heated to 65°C to 160°C by a quartz electric heating oven 33, to the direction of 16. The synthetic paper 1 is then heat up to no higher than 160°C ( not higher than melting point ) by a infrared heater 30 and passing through the embossing roll 36 and the back-up roll 35, which should have Shore A hardness of 60-90.

In the impressing process above, cooling water was supplied from a water cooling system (not indicated) to the core of embossing roll 36 to cool its surface.

The engraving of embossing roll in depth should between 0.2 to 1000µm, range was decided by the product needed so long as it can be formed after passing through the embossing roll 36 and the special hardness back-up roll 35 to form the embossed synthetic paper 34 products and effective cooling.

The speed for the embossed synthetic paper 34 passing through the embossing roll 36 and the special hardness back-up roll 35 and two adjacent cooling drum 31 with 7°C circulating colling water is around 15m/min.

### [ Embodiment 1 ]

Unlike pearl synthetic paper was used to be embossed on traditional embosser, modified embosser as referred was used. Using patterns on canvas with 5µm to 15µm in depth and passing the cooling drum with 7°C cooling water at the speed of 15 m/min.

### [ Embodiment 2 ]

Unlike pearl synthetic paper was used to be embossed on traditional embosser, modified embosser as referred was used. Using patterns on rice paper with 2µm to 10µm in depth and passing the cooling drum with 7°C cooling water at the speed of 18 m/min.

### [ Embodiment 3 ]

Unlike pearl synthetic paper was used to be embossed on traditional embosser, modified embosser as referred was used. Using patterns on shark leather with 0.2µm to 0.4µm in depth and passing the cooling drum with 7°C cooling water at the speed of 15 m/min.

The synthetic paper compressed from papers of embodiment 1 to 3, which using modified embossing device, contributes to the paper feeding of printing equipment.

### DESCRIPTION OF ELEMENTS

- 1: 3-layer co-extruded biaxial oriented polypropylene pearl synthetic paper
- 11: secondary substrate
- 12: main substrate
- 13: secondary substrate
- 14: embossment or impression
- 16: orientation directions arrow
- 21: extruder device
- 211: primary extractable twin-screw extruder
- 213a 213b: secondary extractable twin-screw extruder
- 22: cooling shaping roller device
- 23: longitudinal orientation device
- 24: lateral orientation device
- 25: corona discharge treatment device
- 26: rolling device
- 30: infrared heater
- 31: cooling drums
- 32: heating roll
- 33: quartz electric heating oven
- 34: embossed synthetic paper
- 35: back-up roll
- 36: embossing roll

## Claims

1. A method for processing the impression structure of 3-layer co-extruded biaxial oriented polypropylene pearl synthetic paper (1) which comprising:
1) preheating a pearl synthetic paper with a weight 20 g/m²-210 g/m² to 65°C to 160°C;
2) embossing the pearl synthetic paper by passing through a embossing device including a rubber back-up roll (35) having Shore A hardness of 60-90 and an embossing roll (36) with a designed pattern;
3) cooling the embossing roll and the back-up roll synchronously during embossing;
4) cooling the impression by the two adjacent cooling drums (31), and then the synthetic paper having a certain roughness to facilitate sheet-fed or a substitutional canvas and art paper.

2. The method according to claim 1, wherein the depth of the impression on the synthetic paper is between 0.2-1000 µm.

3. The method according to claim 1, wherein the pearl synthetic paper is fed into the infrared heater for preheating to 65°C to 160°C, and then the preheated synthetic paper is passed through the embossing roll and the rubber back-up roll having Shore A hardness of 60-90 to form the pearl synthetic paper with impression.

4. A embossing device for processing the impression structure of 3-layer co-extruded biaxial oriented polypropylene pearl synthetic paper (1) as claimed in claim 1, which comprising:
a rubber back-up roll (35) having Shore A hardness of 60-90;
an embossing roll (36) with a designed pattern and a cooling system having a core;
a quartz electric heating oven (33) preheated to 65°C to 160°C which is on one side of a preheating roll (32) and has a gap between the preheating roll;
an infrared heater (30) which is under the quartz electric heating oven; and
two adjacent cooling drums (31) with 7°C.

5. The device according to claim 4, wherein the speed of the pearl synthetic paper passing through the back-up roll, the embossing roll and the cooling drum is 15-18 m per minute.

## Patentansprüche

1. Ein Verfahren zur Bearbeitung der Prägestruktur eines synthetischen 3-Lagen co-extrudierten, biaxial ausgerichteten Polypropylen Perl-Papiers (1), umfassend:
1) Vorheizen eines synthetischen Perl-Papiers mit einem Gewicht von 20 g/m²-210 g/m² auf 65 °C bis 160 °C;
2) Prägen des synthetischen Perl-Papiers mittels Durchlauf durch eine Prägevorrichtung, die eine Gummistützwalze (35) mit einer Shore-A-Härte von 60-90 und eine Prägewalze (36) mit einem ausgebildeten Muster beinhaltet;
3) synchrones Kühlen der Prägewalze und der Stützwalze während der Prägung;
4) Kühlen der Prägung durch die zwei benachbarten Kühlzylinder (31), und wobei das synthetische Papier dann eine bestimmte Rauheit besitzt, um die Blattförderung zu ermöglichen, oder ein Leinwandersatz oder ein Kunstpapier ist.

2. Das Verfahren gemäß Anspruch 1, wobei die Tiefe der Prägung auf dem synthetischen Papier zwischen 0,2-1000 µm beträgt.

3. Das Verfahren gemäß Anspruch 1, wobei das synthetische Perl-Papier zur Vorheizung auf 65 °C bis 160 °C in das Infrarot-Heizgerät eingespeist wird, woraufhin das vorgeheizte synthetische Papier durch die Prägewalze und die Gummistützwalze mit einer Shore-A-Härte von 60-90 geführt wird, um das synthetische Perl-Papier mit einer Prägung zu bilden.

4. Eine Prägevorrichtung zur Bearbeitung der Prägestruktur eines synthetischen 3-Lagen co-extrudierten, biaxial ausgerichteten Polypropylen Perl-Papiers (1) wie in Anspruch 1 beansprucht, welche umfasst:
eine Gummistützwalze (35) mit einer Shore-A-Härte von 60-90;
eine Prägewalze (36) mit einem ausgebildeten Muster und einem Kühlsystem, das einen Kern besitzt;
einen elektrischen Quarz-Heizofen (33), der auf 65 °C bis 160 °C vorgeheizt ist,
der sich auf einer Seite einer Vorheizwalze (32) befindet und eine Lücke zwischen der Vorheizwalze aufweist;
ein Infrarot-Heizgerät (30), das sich unter dem elektrischen Quarz-Heizofen befindet; und
zwei benachbarte Kühlzylinder (31) mit 7 °C.

5. Die Vorrichtung gemäß Anspruch 4, wobei die Geschwindigkeit, mit der das synthetische Perl-Papier durch die Stützwalze, die Prägewalze und den Kühlzylinder läuft, 15-18 m pro Minute beträgt.

## Revendications

1. Procédé pour traiter la structure d'impression d'un papier synthétique perlé constitué de trois couches de polypropylène co-extrudées à orientation biaxiale (1), comprenant les étapes consistant à :
1) préchauffer un papier synthétique perlé avec un poids de 20 g/m²-210 g/m² à 65 °C jusqu'à 160 °C ;
2) gaufrer le papier synthétique perlé en le faisant passer dans un dispositif de gaufrage comprenant un rouleau de support en caoutchouc (35) ayant une dureté Shore A de 60-90 et un rouleau de gaufrage (36) avec un modèle créé ;
3) refroidir le rouleau de gaufrage et le rouleau de support de manière synchrone pendant le gaufrage ;
4) refroidir l'impression grâce aux deux tambours de refroidissement (31) adjacents et ensuite le papier synthétique ayant une certaine rugosité afin de faciliter l'alimentation en feuille ou une toile de substitution et un papier couché.

2. Procédé selon la revendication 1, dans lequel la profondeur de l'impression sur le papier synthétique est comprise entre 0,2 et 1000 µm.

3. Procédé selon la revendication 1, dans lequel le papier synthétique perlé est alimenté dans le dispositif de chauffage à infrarouge pour le préchauffage à 65 °C jusqu'à 160 °C et ensuite le papier synthétique préchauffé passe dans le rouleau de gaufrage et le rouleau de support en caoutchouc ayant une dureté Shore A de 60-90 afin de former le papier synthétique perlé avec impression.

4. Dispositif de gaufrage pour traiter la structure d'impression d'un papier synthétique perlé constitué de trois couches de polypropylène co-extrudées à orientation biaxiale (1) selon la revendication 1, comprenant :
un rouleau de support en caoutchouc (35) ayant une dureté Shore A de 60-90 ;
un rouleau de gaufrage (36) avec un modèle créé et un système de refroidissement ayant un noyau ;
un four de chauffage électrique à quartz (33) préchauffé à 65 °C jusqu'à 160 °C qui est sur un côté d'un rouleau de préchauffage (32) et a un espace entre le rouleau de préchauffage ;
un dispositif de chauffage à infrarouge (30) qui est sous le four de chauffage électrique à quartz ; et
deux tambours de refroidissement (31) adjacents avec 7 °C.

5. Dispositif selon la revendication 4, dans lequel la vitesse du papier synthétique perlé passant par le rouleau de support, le rouleau de gaufrage et le tambour de refroidissement est de 15-18 m par minute.
